# EUROPEAN PATENT APPLICATION

(11) **EP 4 470 742 A1**
(43) Date of publication of application: **04.12.2024**
(21) Application number: 24170413.9
(22) Date of filing: 16.04.2024
(51) Int. Cl.: B29B 9/16, B29B 13/06, F26B 17/00, B29B 7/60, B29C 48/285

(54) **APPARATUS AND METHOD FOR PROCESSING INCOHERENT MATERIAL**

(30) Priority: 30.05.2023 IT 202300010956
(71) Applicant: Piovan S.P.A., 30036 Santa Maria di Sala (VE) (IT)
(72) Inventor: BELLIO, Enrico, 31050 Ponzano V.to (IT); BORTOLOZZO, Marco, 30030 Salzano (VE) (IT)
(74) Representative: Luppi Intellectual Property S.r.l.

(57) **Abstract**

An apparatus and method are disclosed for processing incoherent material with a process gas, particularly for heating and extracting moisture from polymer granules with hot air, with a container including a material volume for containing the incoherent material and a gas volume traversable by the process gas and which includes various portions separated from each other, i.e. a central inner portion, a lower outer annular-shaped portion, an upper outer annular-shaped portion and an intermediate annular-shaped portion, wherein each portion is separated from the material volume via gas-permeable gas-material interfaces, and wherein a maximum section width of the intermediate portion is greater than an average section width of the lower outer portion and/or greater than an average section width of the upper outer portion, in order to reduce pressure drops in the process gas flow.

## Description

### Background of the invention

The invention concerns an apparatus and a method for processing incoherent material, i.e. in the form of granules and/or micro-granules and/or pellets and/or powder and/or flakes or similar, in particular for processing hygroscopic incoherent material, more particularly incoherent plastics. In particular, the invention is applicable to heat incoherent hygroscopic material, for example material that must be dried and/or dehumidified before its use.

Specifically, but not exclusively, the invention can be advantageously applied in the context of a dehumidification and/or drying and/or crystallization and/or packaging and/or transport plant in vacuum and/or under pressure of incoherent plastics. This plant may be intended, in particular, to feed a user machine, such as, for example, a machine for processing and transforming plastics, in particular an extruder that supplies extruded plastics to an injection and/or blow and/or compression molding apparatus.

Patent publication US 2021/0387380 A1 discloses an apparatus for processing incoherent material in which the incoherent material (polymer granule or pellet) is introduced into a container (drying and/or dehumidification hopper) and is passed through (in countercurrent) by a process gas (heated air), sufficiently dry, which absorbs excess humidity.

Patent publication DE 102010024917 A1 discloses an apparatus for processing incoherent material with a process gas wherein a container includes a material volume that can contain the incoherent material and a gas volume that is separated from the material volume by gas-material interfaces that are gas permeable.

The prior art can be improved in various aspects.

In particular, it would be desirable to reduce the pressure drops in the process gas flow, thus reducing energy consumption.

Another drawback of the prior art is the risk of damaging the material due to localized overheating.

It would also be desirable to implement a process of the incoherent material (for example, polymer granule or pellet) in which all the processed particles consistently reach the same desired temperature and humidity conditions, in particular even when the mass of the material to be processed is remarkable.

Another need is to obtain a uniform distribution of thermal energy in the mass of each single processed particle.

Another limitation of the prior art is the non-uniformity in the transfer of thermal energy from the process gas (for example, hot air) to the mass of the processed material, a phenomenon probably caused by the formation of preferential paths in the flow of the process gas through inside the mass of the material.

### Summary of the invention

An object of the invention is to provide an apparatus and/or a method able of overcoming one or more of the aforementioned limitations and drawbacks of the prior art.

An object is to provide a solution, which is alternative to those of the prior art, for processing incoherent material (in particular, incoherent hygroscopic material, for example incoherent plastics).

An advantage is to reduce the pressure drops in the process gas flow, while obtaining a high efficiency in the transfer of thermal energy from the process gas to the mass of the material, thus reducing energy consumption.

An advantage is to reduce the aforementioned phenomenon of non-uniformity in the transfer of thermal energy from the process gas to the mass of the material.

An advantage is to make the distribution of the process gas inside the container where the material is processed homogeneous and uniform.

An advantage is to limit the incoherent material transported "in flight" by the process gas and therefore reduce the clogging of filter media.

An advantage is to transmit thermal energy to the single particle of material in such a way as to homogenize the temperature of the particle by reducing the thermal gradient between the core and the external surface of the particle.

An advantage is to reduce or eliminate the deposit of dust (coming from the material) along the process gas passage ducts.

An advantage is to obtain high efficiency of the process, in particular of a process that involves heating the material.

An advantage is to reduce the risk of localized overheating that can damage the incoherent material processed with hot process gas.

An advantage is to make available a constructively simple and economical apparatus for processing incoherent material.

These objects and advantages and others are achieved by an apparatus and/or a method according to one or more of the claims reported below.

In one embodiment, an apparatus for processing incoherent material comprises a container which includes a material volume for containing the material and a gas volume which includes various portions separated from each other, i.e. at least an inner portion, an annular-shaped lower outer portion, an annular-shaped upper outer portion and an annular-shaped intermediate portion, wherein each portion of the gas volume is separated from the material volume by respective gas-permeable gas-material interfaces, wherein at least one part of the lower outer portion is arranged below the middle portion and at least one portion of the upper outer portion is arranged above the middle portion, and wherein a maximum section width of the middle portion is greater than an average section width of the lower outer portion and/or is greater of an average section width of the upper outer portion.

In this description, "gas-permeable interface" means an interface (e.g. a perforated wall) that separates the material volume and the gas volume from each other, allowing the process gas to pass through and retaining the incoherent material or at least only allowing any finest particles of material to pass through.

### Brief description of the drawings

The invention can be better understood and implemented with reference to the attached drawings which illustrate a non-limiting example of implementation, in which:

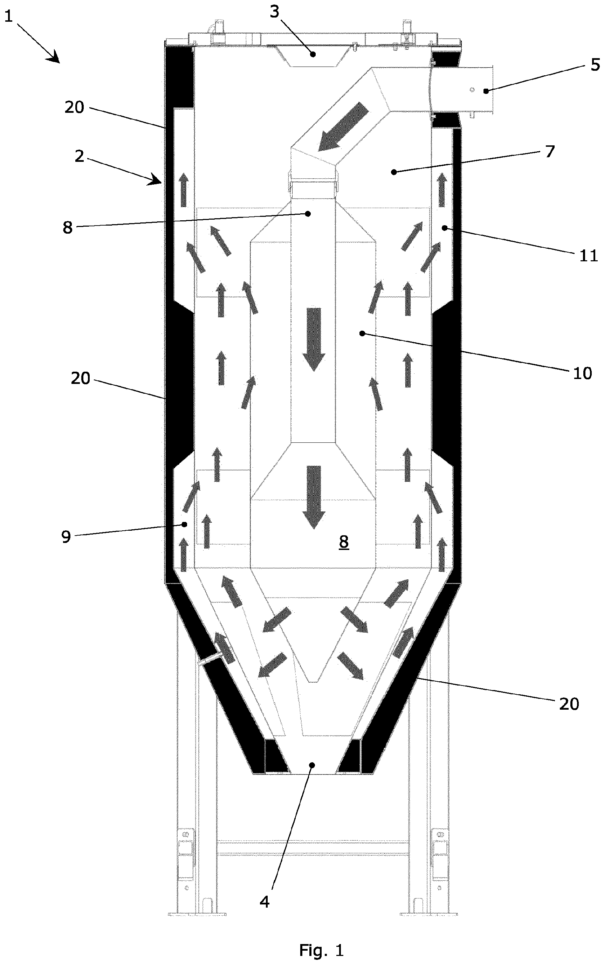

Figure 1 is a schematic section in vertical elevation of an embodiment of an apparatus made in accordance with the invention;

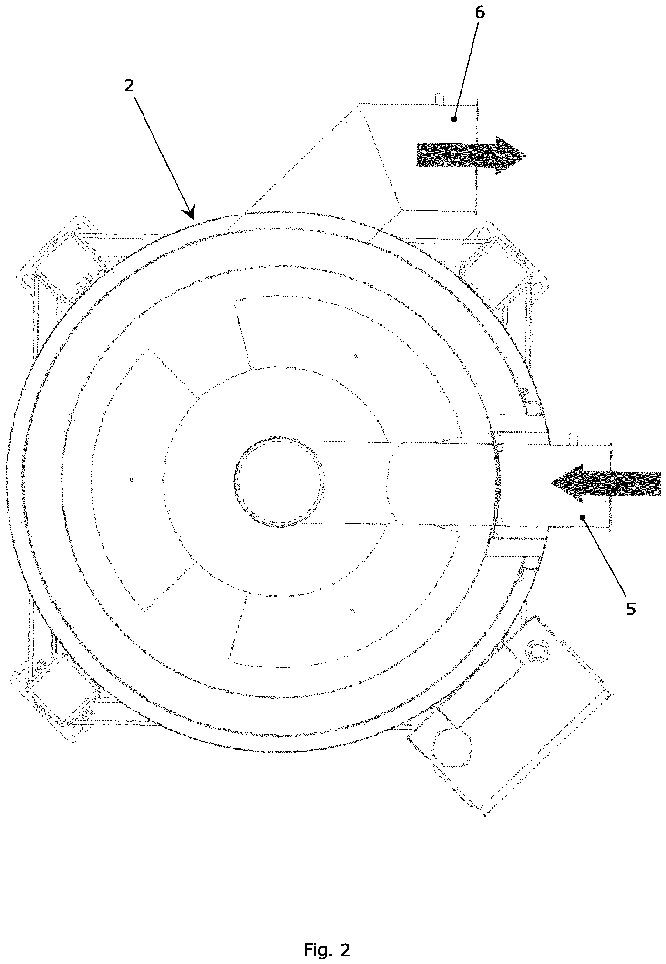

Figure 2 is a top view of Figure 1 with some parts removed to better highlight others;

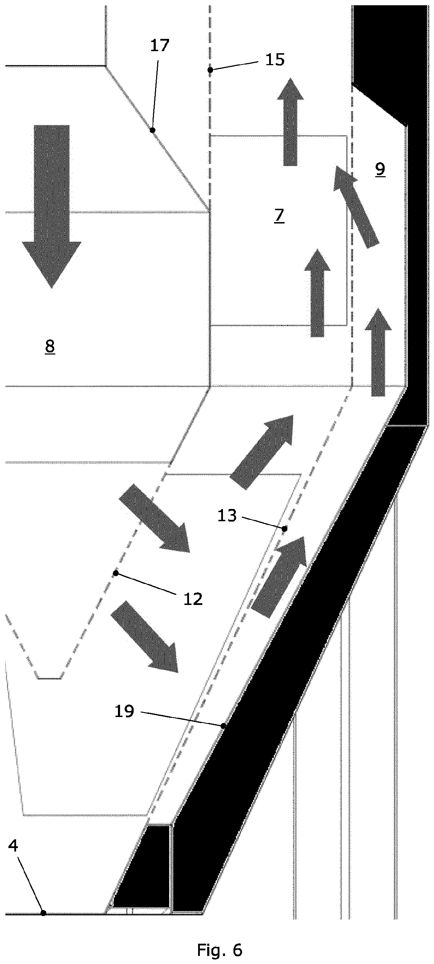

Figures 3 to 6 show four enlarged details of Figure 1.

### Detailed description

With reference to the aforementioned figures, 1 indicates as a whole an apparatus for processing (in particular, by heating) incoherent material, i.e. in the form of granules and/or micro-granules and/or pellets and/or powder and/or or flakes or similar, in particular hygroscopic incoherent material, with a process gas. The hygroscopic incoherent material may include, in particular, incoherent plastics. The process gas may comprise, in particular, a heated gas. The process gas may include, in particular, air, or an inert gas (for example, nitrogen), or another gas. In this specific example, the process gas is air.

The apparatus 1 comprises a container 2, in particular a vertically extended container 2. The container 2 may include, in particular, a hopper for drying and/or dehumidifying incoherent plastics (polymer granules or pellets). The container 2 may comprise, in particular, a vertical central longitudinal axis.

The apparatus 1 comprises an upper inlet 3 configured for the entry of incoherent material into the container 2. The apparatus 1 comprises a lower outlet 4 configured for the exit of incoherent material from the container 2. The apparatus 1 comprises at least one first gas port 5 configured to introduce/extract process gas into/from the container 2. The apparatus 1 comprises at least one second gas port 6 configured to extract/introduce process gas from/into the container 2. The process gas may include, in particular, heated gas (to a controlled temperature value) and/or dehumidified gas (to a controlled dewpoint value).

The apparatus 1 may comprise, in particular, a closed gas circuit (not shown) configured to withdraw the used process gas (for example, wet process gas) exiting the container 2 (in particular, exiting one of the two gas ports, for example from the second gas port 6), treat (for example, dehumidify) the used process gas and recirculate the treated process gas to reintroduce it into the container 2 (in particular, through the other of the two gas ports, for example through the first gas port 5). The apparatus 1 may comprise, in particular (as an alternative or in addition to the closed gas circuit), an open gas circuit (not shown) in which the process gas introduced into the container is not treated process gas coming from an outlet of the container 2 and recirculated, but treated process gas coming, for example, from the external environment.

The apparatus 1 may comprise, in particular, operating means (not shown) for generating a process gas flow in the (closed or open) gas circuit. The operating means may comprise, in particular, a blower (for example a side channel blower), or a fan, or other flow generator.

The apparatus 1 may comprise, in particular, treatment means (not shown) for treating the process gas to be introduced into the container 2. The treatment means may comprise, in particular, dehumidification means for dehumidifying the process gas, for example dehumidification means comprising two dehumidification units arranged in parallel to alternate treatment cycles and regeneration cycles.

The apparatus 1 may comprise, in particular, regeneration means (not shown) for regenerating the dehumidification means, for example by heating with a regeneration fluid (for example, air heated by at least one heater, in particular an electric resistance heater).

The container 2 internally includes at least one material volume 7 configured to contain the incoherent material. The material volume 7 is configured so that the incoherent material can enter the material volume 7 through the upper inlet 3 and can exit the material volume 7 through the lower outlet 4. The transport of the incoherent material through the material volume (from the upper inlet 3 to the lower outlet 4) may occur, for example, by descent of the material due to gravity and could be favored by transport promoting means (not shown) comprising, for example, means for stirring the material (for example, a set of rotating blades).

The container 2 internally includes at least one gas volume separated from the material volume 7. The gas volume may comprise, in particular, a volume which is internal to the container, and which is configured to allow the passage of the gas and to avoid the passage of the incoherent material, even if a possible passage (generally unwanted but almost inevitable) of very fine particles (fragments, dust, etc.) present in the incoherent material is possible. The gas volume comprises a plurality of portions separated from each other. The plurality of portions of the gas volume comprises at least an inner portion 8, a lower outer portion 9, an intermediate portion 10 and an upper outer portion 11.

It is possible to provide, in particular, that at least a part of the lower outer portion 9 is arranged below the intermediate portion 10 and that at least a part of the upper outer portion 11 is arranged above the intermediate portion 10. It is possible to provide, in particular, that at least a part of the lower outer portion 9 is arranged more externally (with reference to a vertical central axis of the container 2) with respect to the intermediate portion 10 and that at least a part of the upper outer portion 11 is arranged more externally (with reference to a vertical central axis of the container 2) with respect to the intermediate portion 10. It is possible to provide, in particular, that at least a part of the inner portion 8 is arranged more internally (with reference to a vertical central axis of the container 2) with respect to the intermediate portion 10.

The inner portion 8 may occupy, in particular, at least in part a central area of the container 2. A part of the inner portion 8 is separated from the material volume 7 by a first gas-material interface 12 permeable to the gas.

The lower outer portion 9 is at least partly annular in shape and is arranged so as to surround a part of the material volume 7. The lower outer portion 9 is separated from the material volume 7 by a second gas-material interface 13 permeable to gas. The second gas-material interface 13 internally delimits the lower outer portion 9.

The intermediate portion 10 is at least partly annular in shape and is arranged so as to surround a part of the inner portion 8. The intermediate portion 10 is separated from the inner portion 8 by a gas-impermeable wall 14 which internally delimits the intermediate portion 10. The wall 14 may comprise, in particular, a portion of duct configured to transport the process gas, and which can contribute to define the inner portion 8 of the gas volume. The wall 14 may comprise, in particular, a wall at least partly cylindrical in shape.

The intermediate portion 10 is separated from the material volume 7 by a third gas-material interface 15 that is permeable to the gas. The third gas-material interface 15 externally delimits the intermediate portion 10.

The upper outer portion 11 is at least partly annular in shape and is arranged so as to surround a part of the material volume 7. The upper outer portion 11 is arranged above the lower outer portion 9. The upper outer portion 11 is separated from the material volume 7 by a fourth gas-permeable gas-material interface 16. The fourth gas-material interface 16 internally delimits the upper outer portion 11.

It is possible to provide a process gas flow that enters the gas volume through the first gas port 5 and exits the gas volume through the second gas port 6 (with a path indicated by arrows in the attached figures), or a process gas flow that follows a reverse path (not shown) entering the gas volume through the second gas port 6 and exiting the gas volume through the first gas port 5.

The inner portion 8 is configured so that the process gas can pass through the inner portion 8 passing between the first gas port 5 and the first gas-material interface 12 (if the first gas port 5 is the gas inlet into the container 2, then the process gas flow will proceed from the first gas port 5 to the first gas-material interface 12, as indicated by the arrows in the attached figures, with a process gas flow direction predominantly downwards).

The upper outer portion 11 is configured so that the process gas can pass through the upper outer portion 11 passing between the second gas port 6 and the fourth gas-material interface 16 (if the second gas port 6 is the outlet gas from the container 2, then the process gas flow will proceed from the fourth gas-material interface 16 to the second gas port 6, as indicated by the arrows in the attached figures, with a process gas flow direction predominantly upwards).

A maximum cross-section width D of the intermediate portion 10 is greater than an average cross-section width of the lower outer portion 9, and it is also possible to provide, in addition or alternatively, that the maximum cross-section width D of the intermediate portion 10 is greater than an average cross-section width of the upper outer portion 11, where cross-section width means a dimension in the horizontal direction of a cross-section of the respective portion of the gas volume. In the specific example illustrated, the maximum cross-section width D of the intermediate portion 10 is greater than both an average cross-section width of the lower outer portion 9 and an average cross-section width of the upper outer portion 11.

It has been seen that providing the intermediate portion 10 with a maximum cross-section width D greater than the average cross-section width of the lower outer portion 9, and/or greater than the average cross-section width of the upper outer portion 11, allows to reduce the pressure drops in the process gas flow, without compromising the process efficiency, which still remains sufficiently high, in particular in the transfer of thermal energy from the process gas to the mass of the material, thus reducing energy consumption.

The maximum cross-section width D of the intermediate portion 10 may be, in particular, greater than a maximum cross-section width E of the lower outer portion 9 and/or it may be, in particular, greater than a maximum width F of cross section of the upper outer portion 11.

It is possible to provide, in particular, that a ratio D/E between the maximum cross-section width D of the intermediate portion 10 and the maximum cross-section width E of the lower outer portion 9 is greater than 6/5, more particular greater than 5/4, or greater than 4/3, or greater than 3/2. The D/E ratio may be, as in the specific example illustrated, greater than 3/2, or greater than 8/5, for example included in the range 2.0 ± 0.5, or approximately equal to 2.0.

It is possible to provide, in particular, that a ratio D/F between the maximum cross-section width D of the intermediate portion 10 and the maximum cross-section width F of the upper outer portion is greater than 6/5, more particularly greater than 5/4, or greater than 4/3, or greater than 3/2. The D/F ratio may be, as in the specific example illustrated, greater than 3/2, or greater than 8/5, for example included in the interval 2.0 ± 0.5, or approximately equal to 2.0.

The maximum cross-section width D of the intermediate portion 10 may be, in particular, greater than 10.5 cm and/or less than 19.5 cm and/or included in the range between 10.5 cm and 19.5 cm and/or within the range 15 ± 2.5 cm. The maximum cross-section width E of the lower outer portion 9 may be, in particular, greater than 2.5 cm and/or included in the range 7.5 ± 2.5 cm. The maximum cross-section width F of the upper outer portion 11 may be, in particular, greater than 3 cm and/or included in the range 7.5 ± 2.5 cm. In particular, it is possible to provide examples in which the maximum cross-section width D of the intermediate portion 10 is greater than 10.5 cm, the maximum cross-section width E of the lower outer portion 9 is greater than 2.5 cm and the maximum cross-section width F of the upper outer portion 11 is greater than 3 cm. In particular, it is possible to provide examples in which the maximum cross-section width D of the intermediate portion 10 is less than 19.5 cm, the maximum cross-section width E of the lower outer portion 9 is less than 12.7 cm and the maximum cross-section width F of the upper outer portion 11 is less than 11.9 cm.

An average cross-sectional width of the intermediate portion 10 may be, in particular, greater than the average cross-sectional width of the lower outer portion 9. An average cross-sectional width of the intermediate portion 10 may be, in particular, greater than average cross-sectional width of the upper outer portion 11.

It is possible to provide, in particular, that a lower end portion of the intermediate portion 10 is internally delimited by a gas-impermeable annular wall 17 and flared downwards (i.e. which increases its diameter by proceeding downwards). The annular wall 17 may be, in particular, of a truncated cone shape (with a smaller upper base and a greater lower base). The annular wall 17 may include, in particular, a portion of the conduit which is configured to transport the process gas and which can contribute to defining the inner portion 8 of the gas volume. The annular wall 17 may, in particular, be joined with the wall 14.

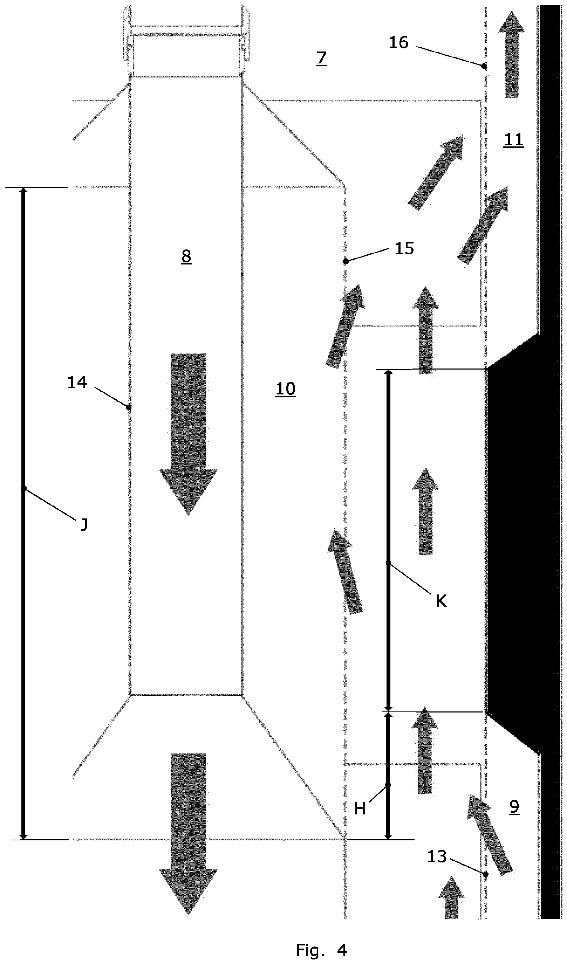

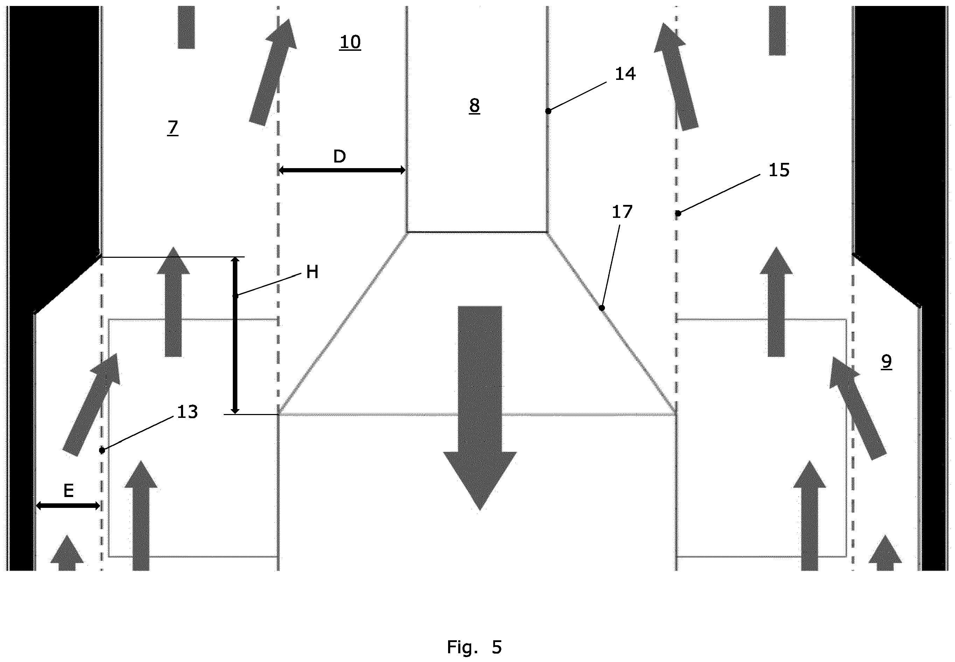

The annular wall 17 may be shaped so that the lower end portion of the intermediate portion 10 has a cross-section width that decreases downwards (see Figure 4 or 5). It has been seen that the shape of the annular wall 17 and/or of the lower end portion of the intermediate portion 10 contributes to promoting a certain accumulation of any thinner particles of material, which pass through the third gas-material interface 15, on the bottom of the intermediate portion 10, favoring the flow of the process gas along its path inside the container 2, also reducing the risk that these thinner particles could be transported in flight and reach the gas outlet (i.e. the second gas port 6).

At least a part of the lower end portion of the intermediate portion 10 is arranged alongside at the same vertical height, for a height H, an upper end portion of the lower outer portion 9.

A lower end portion of the upper outer portion 11 is delimited externally by an annular wall 18 which is impermeable to gas and flared downwards (i.e. which decreases its diameter by proceeding downwards). The annular wall 18 may, in particular, be of a truncated cone shape.

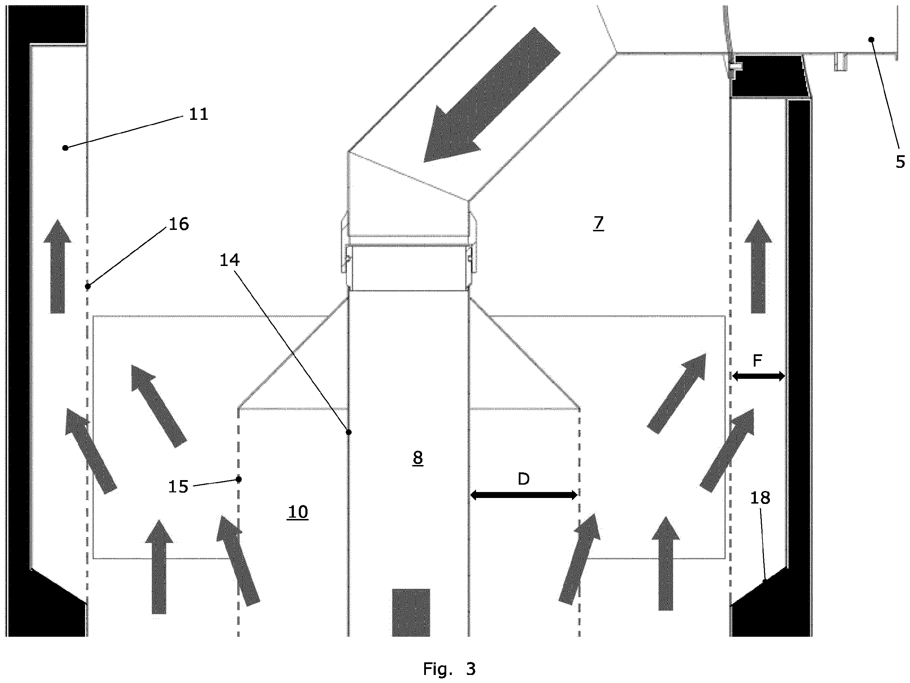

The annular wall 18 may be shaped so that the lower end portion of the upper outer portion 11 has a cross-sectional width that decreases downwards (see Figure 3 or 4). It has been seen that the shape of the annular wall 18 and/or of the lower end portion of the upper outer portion 11 contributes to promoting a certain accumulation of any finer particles of material, which pass through the fourth gas-material interface 16, on the bottom of the upper outer portion 11, favoring the flow of the process gas along its path inside the container 2, also reducing the risk that these thinner particles could be transported in flight and reach the gas outlet (i.e. the second gas port 6).

It is possible to provide, in particular, that a K/J ratio is greater than 1/3, where K is a minimum vertical distance between the second gas-material interface 13 and the fourth gas-material interface 16 and J is a total height of the third gas-material interface 15. It is possible to provide, more specifically, that the K/J ratio is greater than 1/2, or included in an interval 2/3 ± 1/6, or approximately equal to 2/3. In other examples, the K/J ratio may be expected to be within a range of 3/5 ± 1/5, or approximately equal to 3/5. It has been seen that the choice of these K/J ratios improves the efficiency of the thermal process on the incoherent material in container 2, obtaining a valid compromise between the pressure drops in the process gas flow and the transfer of thermal energy from the gas to the material.

As mentioned, the third gas-material interface 15 may include, in particular, a lower portion placed horizontally alongside, for a section of height H, an upper portion of the second gas-material interface 13. It is possible to provide, in particular, that the height H is less than the minimum vertical distance K between the second gas-material interface 13 and the fourth gas-material interface 16. It is possible to provide, in particular, that the H/K ratio is less than 4/5, or less than 3/4, or less than 2/3, or less than 1/2, or within the range 1/2 ± 1/4. It has been seen that, also in this case, the choice of these H/K ratios improves the performance of the thermal process on the incoherent material in container 2 and reduces the risk of localized overheating.

The height H of the side-by-side positioning between the intermediate portion 10 and the lower outer portion 9 may be, in particular, greater than 15.5 cm and/or less than 25.3 cm and/or included in the range between 15.5 cm and 25.3 cm and/or within the range of 20.4 ± 3.6 cm. The minimum vertical distance K between the second gas-material interface 13 and the fourth gas-material interface 16 may be, in particular, greater than 45 cm and/or less than 72.5 cm and/or included in the range between 45 cm and 72.5 cm and/or within the range 58.5 ± 8.5 cm. The total height J of the third gas-material interface 15 may be, in particular, greater than 83 cm and/or less than 117.5 cm and/or included in the range between 83 cm and 117.5 cm and/or included in the range 100 ± 12 cm.

The first gas-material interface 12 may comprise, in particular, at least one downward frusto-conical portion with a C1 taper, where taper of a frusto-conical portion means, in this description, the ratio between the difference of the diameters of two cross sections of the frusto-conical section and the axial distance between the same cross sections. The second gas-material interface 13 may comprise, in particular, at least one downward frusto-conical portion with a C2 taper. It is possible to provide, in particular, that C1 > C2, in particular C1 - C2 > 0.05, more specifically C1 - C2 > 0.10. It has been seen that a certain difference in taper between C1 and C2 improves the homogeneity of the heat transfer from the process gas to the incoherent material.

It is possible to provide, in particular, that a lower part of the aforementioned frusto-conical portion of the second gas-material interface 13 is arranged below the frusto-conical portion of the first gas-material interface 12.

The lower outer portion 9 may be, in particular, at least partially externally delimited by a flared wall 19 which is impermeable to gas and which has a shape that flares downwards. The flared wall 19 may comprise, in particular, a frusto-conical wall with a C3 taper. The flared wall 19 may, in particular, be arranged at the same height level as at least a part of the frusto-conical portion with a conicity C2 of the second gas-material interface 13, in which C3 > C2, in particular C3 - C2 > 0.05, more specifically C3 - C2 > 0.10. It has been seen, also in this case, that a certain difference between the C2 and C3 tapers makes it possible to improve the homogeneity of the heat transfer from the process gas to the incoherent material.

The taper C1 may be, in particular, greater than 0.85 and/or less than 1.2 and/or included in the range between 0.85 and 1.2 and/or included in the range 1.02 ± 0.15. The C2 taper may be, in particular, greater than 0.63.

20 indicates a casing (impermeable to gas, for example an insulated casing) which surrounds and encloses the material volume and the gas volume.

Each of the gas-material interfaces 12, 13, 15 and 16 may comprise, in particular, a perforated wall. The second gas-material interface 13 may comprise, as in the specific illustrated example, a lower part with a flared shape (in particular, frusto-conical) towards the bottom and an upper part with a cylindrical shape. This flared lower part may be joined to the cylindrical upper part.

In the operation of the apparatus 1 it is possible to implement a method for processing (in particular, for heating) incoherent material with a process gas. In particular, it is possible to provide that the processed incoherent material includes plastics (polymer granules) which is introduced into the material volume 7 through the upper inlet 3 and is extracted from the container 2 through the lower outlet 4. It is possible to provide that the process gas is heated and then introduced into the gas volume through the first gas port 5 (or the second gas port 6, in examples not illustrated) and is extracted from the second gas port 6 (or from the first gas port 5, in examples not illustrated).

It is possible to envisage, in particular, that the processed incoherent plastics comprise polyolefins and/or polyethylenes and/or polyamides. The processed incoherent plastics may comprise, in particular, at least in part PCR (Post-Consumer Recycled) recycled material, for example with a weight percentage of PCR incoherent plastics between 20% and 100%.

The processed incoherent plastic material may include, in particular, particles within certain grain size ranges, for example cylindrical granules or pellets with a diameter between 1.5 mm and 4 mm and a length between 2 mm and 6 mm and/or spherical granules or pellets with a diameter between 1.5 mm and 5 mm and/or ellipsoidal granules or pellets with a major diameter between 2.5 mm and 6 mm and a smaller diameter between 1.5 mm and 4 mm and/or flakes with a thickness between 0.1 mm and 1 mm, with a width between 1 mm and 10 mm and with a length between 1 mm and 10 mm.

In operation, assuming that the flow direction of the process gas is from the first gas port 5 (inlet) to the second gas port 6 (outlet), the process gas (for example, heated and/or dehumidified air) enters the inner portion 8 and descends downwards to then enter the material volume 7 through the first gas-material interface 12. A part of the process gas exiting from the first gas-material interface 12 will be able to ascend along the material volume 7 crossing countercurrent the incoherent material that descends towards the lower outlet 4, while another part of the process gas exiting from the first gas-material interface 12 will be able to pass through the incoherent material for a certain distance and then enter the lower outer portion 9 and then exit from the same lower outer portion 9 and return to the material volume 7, always passing through the second gas-material interface 13.

A part of the process gas that rises along the material volume 7 may enter the intermediate portion 10 and then exit from the same intermediate portion 10 (in particular after having ascended a portion of the intermediate portion 10) and then return to the material volume 7, always passing through the third gas-material interface 15.

Furthermore, a part of the process gas that rises along the material volume 7 will be able to enter the upper outer portion 11 through the fourth gas-material interface 16 and then exit from the container 2 through the second gas port 6.

It is observed that the process gas flow passes through the incoherent material in the material volume 7 in a complex manner with motion components in various horizontal directions as well as with a motion component in the vertical direction.

### Legend

- 1: apparatus for processing incoherent material
- 2: container
- 3: upper inlet
- 4: lower outlet
- 5: first gas port
- 6: second gas port
- 7: material volume
- 8: inner portion of gas volume
- 9: lower outer portion of gas volume
- 10: intermediate portion of gas volume
- 11: upper outer portion of gas volume
- 12: first gas-material interface
- 13: second gas-material interface
- 14: gas-impermeable wall
- 15: third gas-material interface
- 16: fourth gas-material interface
- 17: annular wall
- 18: annular wall
- 19: flared wall
- 20: casing
- D: maximum cross-sectional width of the intermediate portion
- E: maximum cross-sectional width of the lower outer portion
- F: maximum cross-sectional width of the upper outer portion
- H: side-by-side height between intermediate portion and lower outer portion
- K: minimum vertical distance between the second and fourth gas-material interfaces
- J: total height of the third gas-material interface

## Claims

1. Apparatus (1) for processing incoherent material with a process gas, said apparatus (1) comprising a container (2), an upper inlet (3) configured for the inlet of incoherent material into said container (2), a lower outlet (4) configured for the outlet of incoherent material from said container (2), a first gas port (5) configured to introduce/extract process gas into/from said container (2), and a second gas port (6) configured to extract/introduce process gas from/into said container (2); said container (2) internally including a material volume (7) configured to contain the incoherent material and a gas volume separate from said material volume (7), said gas volume comprising portions separated from each other and which include an inner portion (8), a lower outer portion (9), an intermediate portion (10) and an upper outer portion (11), said inner portion (8) occupying at least in part a central area of said container (2), a part of said inner portion (8) being separated from said material volume (7) by a first gas-material interface (12) that is permeable to gas, said lower outer portion (9) being annular in shape arranged so as to surround a part of said material volume (7) and being separated from said material volume (7) by a second gas-material interface (13) that is permeable to gas and which internally delimits said lower outer portion (9), said intermediate portion (10) being annular in shape arranged so as to surround a part of said inner portion (8) and being separated from said inner portion (8) by a wall (14) that is impermeable to gas and which internally delimits said intermediate portion (10), said upper outer portion (11) being annular in shape arranged so as to surround a part of said material volume (7) and being arranged above said lower outer portion (9), said material volume (7) being configured so that the incoherent material can enter said material volume (7) through said upper inlet (3) and can exit from said material volume (7) through said lower outlet (4), said inner portion (8) being configured so that the process gas can pass through said inner portion (8) passing between said first gas port (5) and said first gas-material interface (12), said intermediate portion (10) being separated from said material volume (7) by a gas-permeable third gas-material interface (15) which externally delimits said intermediate portion (10), said upper outer portion (11) being separated from said material volume (7) by a fourth gas-material interface (16) that is permeable to gas and which internally delimits said upper outer portion (11), said upper outer portion (11) being configured so that the process gas can pass through said upper outer portion (11) passing between said second gas port (6) and said fourth gas-material interface (16), a maximum cross-sectional width (D) of said intermediate portion (10) being greater than an average cross-sectional width of said lower outer portion (9) and/or than an average cross-sectional width of said upper outer portion (11), where by cross-sectional width is meant a dimension in the horizontal direction of a cross-section of the respective portion of said gas volume.

2. Apparatus according to claim 1, wherein said maximum cross-sectional width (D) of said intermediate portion is greater than a maximum cross-sectional width (E) of said lower outer portion (9) and/or a maximum cross-sectional width (F) of said upper outer portion (11).

3. Apparatus according to claim 2, wherein a ratio between said maximum cross-sectional width (D) of said intermediate portion (10) and said maximum cross-sectional width (E) of said lower outer portion (9) is greater than 6/5, in particular greater than 5/4, or greater than 4/3, or greater than 3/2.

4. Apparatus according to claim 2 or 3, wherein a ratio between said maximum cross-sectional width (D) of said intermediate portion (10) and said maximum cross-sectional width (F) of said upper outer portion (11) is greater than 6/5, in particular greater than 5/4, or greater than 4/3, or greater than 3/2.

5. Apparatus according to any one of the preceding claims, wherein an average cross-sectional width of said intermediate portion (10) is greater than said average cross-sectional width of said lower outer portion (9) and/or than said average cross-sectional width of said upper outer portion (11).

6. Apparatus according to any one of the preceding claims, wherein a lower end portion of said intermediate portion (10) is internally delimited by an annular wall (17) that is impermeable to gas and flared descending towards the outside; said annular wall (17) being, in particular, of a frustoconical shape.

7. Apparatus according to claim 6, wherein said lower end portion of said intermediate portion (10) has a cross-sectional width that decreases downward.

8. Apparatus according to claim 6 or 7, wherein at least a part of said lower end portion of said intermediate portion (10) is arranged side by side at the same vertical height for a height H of an upper end portion of said lower outer portion (9).

9. Apparatus according to any one of the preceding claims, wherein a lower end portion of said upper outer portion (11) is externally delimited by an annular wall (18) impermeable to gas and flared descending towards the inside; said annular wall (18) being, in particular, of a frustoconical shape.

10. Apparatus according to claim 9, wherein said lower end portion of said upper outer portion (11) has a cross-sectional width that decreases downward.

11. Apparatus according to any one of the preceding claims, wherein a ratio K/J between a minimum vertical distance K between said second gas-material interface (13) and said fourth gas-material interface (16) and a total height J of said third gas-material interface (15) is greater than 1/3; said ratio K/J being, in particular, higher than 1/2, or included in a range of 2/3 ± 1/6.

12. Apparatus according to any one of the preceding claims, wherein said third gas-material interface (15) comprises a lower portion which is flanked horizontally, for a length of height H, to an upper portion of said second gas-material interface (13), said height H being less than a minimum vertical distance K between said second gas-material interface (13) and said fourth gas-material interface (16).

13. Apparatus according to any one of the preceding claims, wherein said first gas-material interface (12) comprises at least one frustoconical portion downwardly tapering with a C1 taper and said second gas-material interface (13) comprises at least one frustoconical portion downwardly tapering with a C2 taper, where the taper of a frustoconical portion is the ratio between the difference in diameters of two cross-sections of the frustoconical portion and the axial distance between the same cross-sections, wherein C1 > C2, in particular C1 - C2 > 0.05.

14. Apparatus according to claim 13, wherein a lower part of said frustoconical portion of said second gas-material interface (13) is arranged below said frustoconical portion of said first gas-material interface (12).

15. Apparatus according to claim 13 or 14, wherein said lower outer portion (9) is at least partially externally delimited by a wall that is impermeable to the gas and which flares downwards with a taper C3 and is arranged at the same height of at least a part of said frustoconical portion with a C2 taper of said second gas-material interface (13), wherein C3 > C2, in particular C3 - C2 > 0.05.

16. Method for processing incoherent material with a process gas by an apparatus (1) made according to any one of the preceding claims, wherein the incoherent material comprises plastics which is introduced into said material volume (7) through said upper inlet (3) and is extracted through said lower outlet (4), and wherein the process gas is heated and then introduced into said gas volume through one of said first and second gas ports (5; 6) and is extracted from the other of said first and second gas ports (5; 6).

17. Method according to claim 16, wherein said processed incoherent plastics comprises granules or pellets of cylindrical shape with a diameter between 1.5 and 4 mm and a length between 2 and 6 mm and/or granules or pellets of spherical shape with a diameter between 1.5 and 5 mm and/or granules or pellets of ellipsoidal shape with a major diameter between 2.5 and 6 mm and a minor diameter between 1.5 and 4 mm and/or flakes with a thickness between 0.1 and 1 mm, with a width between 1 and 10 mm, and with a length between 1 and 10 mm.

## Amended claims

### Amended claims in accordance with Rule 137(2) EPC.

1. Apparatus (1) for processing incoherent material with a process gas, said apparatus (1) comprising a container (2), an upper inlet (3) configured for the inlet of incoherent material into said container (2), a lower outlet (4) configured for the outlet of incoherent material from said container (2), a first gas port (5) configured to introduce/extract process gas into/from said container (2), and a second gas port (6) configured to extract/introduce process gas from/into said container (2); said container (2) internally including a material volume (7) configured to contain the incoherent material and a gas volume separate from said material volume (7), said gas volume comprising portions separated from each other and which include an inner portion (8), a lower outer portion (9), an intermediate portion (10) and an upper outer portion (11), said inner portion (8) occupying at least in part a central area of said container (2), a part of said inner portion (8) being separated from said material volume (7) by a first gas-material interface (12) that is permeable to gas, said lower outer portion (9) being annular in shape arranged so as to surround a part of said material volume (7) and being separated from said material volume (7) by a second gas-material interface (13) that is permeable to gas and which internally delimits said lower outer portion (9), said intermediate portion (10) being annular in shape arranged so as to surround a part of said inner portion (8) and being separated from said inner portion (8) by a wall (14) that is impermeable to gas and which internally delimits said intermediate portion (10), said upper outer portion (11) being annular in shape arranged so as to surround a part of said material volume (7) and being arranged above said lower outer portion (9), said material volume (7) being configured so that the incoherent material can enter said material volume (7) through said upper inlet (3) and can exit from said material volume (7) through said lower outlet (4), said inner portion (8) being configured so that the process gas can pass through said inner portion (8) passing between said first gas port (5) and said first gas-material interface (12), **characterized by** said intermediate portion (10) being separated from said material volume (7) by a gas-permeable third gas-material interface (15) which externally delimits said intermediate portion (10), said upper outer portion (11) being separated from said material volume (7) by a fourth gas-material interface (16) that is permeable to gas and which internally delimits said upper outer portion (11), said upper outer portion (11) being configured so that the process gas can pass through said upper outer portion (11) passing between said second gas port (6) and said fourth gas-material interface (16), a maximum cross-sectional width (D) of said intermediate portion (10) being greater than an average cross-sectional width of said lower outer portion (9) and/or than an average cross-sectional width of said upper outer portion (11), where by cross-sectional width is meant a dimension in the horizontal direction of a cross-section of the respective portion of said gas volume.

2. Apparatus according to claim 1, wherein said maximum cross-sectional width (D) of said intermediate portion is greater than a maximum cross-sectional width (E) of said lower outer portion (9) and/or a maximum cross-sectional width (F) of said upper outer portion (11).

3. Apparatus according to claim 2, wherein a ratio between said maximum cross-sectional width (D) of said intermediate portion (10) and said maximum cross-sectional width (E) of said lower outer portion (9) is greater than 6/5, in particular greater than 5/4, or greater than 4/3, or greater than 3/2.

4. Apparatus according to claim 2 or 3, wherein a ratio between said maximum cross-sectional width (D) of said intermediate portion (10) and said maximum cross-sectional width (F) of said upper outer portion (11) is greater than 6/5, in particular greater than 5/4, or greater than 4/3, or greater than 3/2.

5. Apparatus according to any one of the preceding claims, wherein an average cross-sectional width of said intermediate portion (10) is greater than said average cross-sectional width of said lower outer portion (9) and/or than said average cross-sectional width of said upper outer portion (11).

6. Apparatus according to any one of the preceding claims, wherein a lower end portion of said intermediate portion (10) is internally delimited by an annular wall (17) that is impermeable to gas and flared descending towards the outside; said annular wall (17) being, in particular, of a frustoconical shape.

7. Apparatus according to claim 6, wherein said lower end portion of said intermediate portion (10) has a cross-sectional width that decreases downward.

8. Apparatus according to claim 6 or 7, wherein at least a part of said lower end portion of said intermediate portion (10) is arranged side by side at the same vertical height for a height H of an upper end portion of said lower outer portion (9).

9. Apparatus according to any one of the preceding claims, wherein a lower end portion of said upper outer portion (11) is externally delimited by an annular wall (18) impermeable to gas and flared descending towards the inside; said annular wall (18) being, in particular, of a frustoconical shape.

10. Apparatus according to claim 9, wherein said lower end portion of said upper outer portion (11) has a cross-sectional width that decreases downward.

11. Apparatus according to any one of the preceding claims, wherein a ratio K/J between a minimum vertical distance K between said second gas-material interface (13) and said fourth gas-material interface (16) and a total height J of said third gas-material interface (15) is greater than 1/3; said ratio K/J being, in particular, higher than 1/2, or included in a range of 2/3 ± 1/6.

12. Apparatus according to any one of the preceding claims, wherein said third gas-material interface (15) comprises a lower portion which is flanked horizontally, for a length of height H, to an upper portion of said second gas-material interface (13), said height H being less than a minimum vertical distance K between said second gas-material interface (13) and said fourth gas-material interface (16).

13. Apparatus according to any one of the preceding claims, wherein said first gas-material interface (12) comprises at least one frustoconical portion downwardly tapering with a C1 taper and said second gas-material interface (13) comprises at least one frustoconical portion downwardly tapering with a C2 taper, where the taper of a frustoconical portion is the ratio between the difference in diameters of two cross-sections of the frustoconical portion and the axial distance between the same cross-sections, wherein C1 > C2, in particular C1 - C2 > 0.05.

14. Apparatus according to claim 13, wherein a lower part of said frustoconical portion of said second gas-material interface (13) is arranged below said frustoconical portion of said first gas-material interface (12).

15. Apparatus according to claim 13 or 14, wherein said lower outer portion (9) is at least partially externally delimited by a wall that is impermeable to the gas and which flares downwards with a taper C3 and is arranged at the same height of at least a part of said frustoconical portion with a C2 taper of said second gas-material interface (13), wherein C3 > C2, in particular C3 - C2 > 0.05.

16. Method for processing incoherent material with a process gas by an apparatus (1) made according to any one of the preceding claims, wherein the incoherent material comprises plastics which is introduced into said material volume (7) through said upper inlet (3) and is extracted through said lower outlet (4), and wherein the process gas is heated and then introduced into said gas volume through one of said first and second gas ports (5; 6) and is extracted from the other of said first and second gas ports (5; 6), **the process gas passing through said inner portion (8) passing between said first gas port (5) and said first gas-material interface (12), the process gas passing through said upper outer portion (11) passing between said second gas port (6) and said fourth gas-material interface (16).**

17. Method according to claim 16, wherein said processed incoherent plastics comprises granules or pellets of cylindrical shape with a diameter between 1.5 and 4 mm and a length between 2 and 6 mm and/or granules or pellets of spherical shape with a diameter between 1.5 and 5 mm and/or granules or pellets of ellipsoidal shape with a major diameter between 2.5 and 6 mm and a minor diameter between 1.5 and 4 mm and/or flakes with a thickness between 0.1 and 1 mm, with a width between 1 and 10 mm, and with a length between 1 and 10 mm.
